# EUROPEAN PATENT APPLICATION

(11) **EP 0 637 494 A1**
(43) Date of publication of application: **08.02.1995**
(21) Application number: 94500139.4
(22) Date of filing: 28.07.1994
(51) Int. Cl.: B29C 45/14, A47G 23/06

(54) **Procedure for manufacturing plastic objects with nonslip surfaces and a nonslip tray**

(30) Priority: 05.08.1993 ES 9301856; 25.01.1994 ES 9400285; 25.01.1994 ES 9400286; 27.05.1994 ES 9401175
(71) Applicant: Bouldstridge Balari, Teresa, E-08023 Barcelona (ES)
(72) Inventor: Bouldstridge Balari, Teresa, E-08023 Barcelona (ES)
(74) Representative: Duran Moya, Luis-Alfonso

(57) **Abstract**

The procedure described comprises the application of a nonslip laminar layer, preferably made of polyurethane, with a thickness of between 50 and 300 microns, preferably about 150 microns, to the face of the object which is to have nonslip properties, closely joining the nonslip film to the surface of the support, preferably by means of over-injection in a mould designed for manufacturing the object by injection, applying a nonslip film of polyurethane previously cut, cleaned and provided with an electrostatic charge, achieving a close join between the nonslip polyurethane film and the object being manufactured.

## Description

The present invention describes a new procedure for manufacturing plastic objects provided with nonslip surfaces, and further relates to a nonslip tray made according to the procedure of the present invention.

### BACKGROUND OF THE INVENTION

The main object of the present invention centres on the production of objects which can be provided with nonslip surfaces, which is particularly useful in the case of many objects used in the hotel business and domestically to carry various objects such as glasses, plates and other similar elements. Currently, objects of this type, such as trays and the like, have surfaces with no special nonslip properties, only the properties corresponding to their normal surface state as a result of currently known procedures and materials. In this respect, it is worth remembering that the materials normally used are either metals, with painted or enamelled surfaces, or plastics of varying hardness and a smooth surface. Traditionally, these objects are given fairly a high surface hardness in order to prevent them from being scratched too easily during use, and at the same time are manufactured using a simple process so as not to make them too expensive. In the case of trays and the like made from a painted or enamelled sheet of steel or aluminium, the frictional properties are very low, as a result of which their handling characteristics are less than satisfactory since when they are used in hotels or in the home, there is the continuous problem of the low adherence of objects placed on them, giving rise to appreciable handling difficulties. Similar problems arise in the case of trays made of plastic.

### DESCRIPTION OF THE INVENTION

The aim of the present invention is a procedure which enables the surfaces of various objects, in particular moulded objects, to be given nonslip properties, providing satisfactory surface properties combined with appreciable nonslip properties, and thereby enabling objects placed on trays and other similar elements manufactured according to the invention to be handled very easily. The procedure of the invention therefore combines a number of highly innovative characteristics which enable the above mentioned drawbacks of the known techniques to be solved.

The main object of the present invention is to coat the active surface of the object that is to have nonslip properties with a film of a nonslip elastomer, preferably an ether-based polyurethane, whose thickness varies across a wide range of values, for example between 50 and 300 microns, preferably about 150 microns, it being possible for said polyurethane film to be joined to the surface of the object to which it is to be applied by means of a wide range of methods, such as over-injection during the process of manufacturing the tray or the like by injection or by other processes, for example the process of thermoforming in which the polyurethane film and the surface of the object are first joined together by heating and then made into the shape of the object by a process of thermoforming; by simply sticking the polyurethane film to the metal tray, for example by the hot melt process, a temperature or pressure activated adhesive, etc., or any other process by means of which a film of nonslip elastomer can be applied to the active surface of the object which is to be given nonslip properties. One particular solution involves the use of a polyurethane film which is adhered to another film made of plastic of variable thickness, for example between 40 and 300 microns, during a process that takes place before the plastic tray is injected.

Although the properties of the nonslip film can vary, below by way of example is a description of an ether-based polyurethane film with the following properties:

| | |
|---|---|
| Density | 1.14-1.23 g/m³ |
| Ultimate tensile strength | 40-60 N/mm² |
| Breaking strain | 380-580 % |
| A Shore hardness | 85-96 |
| Behaviour, temperature variation | -40 to +100°C |
| Abrasion | Excellent |
| Mineral oil and fats | Excellent |
| Organic solvents | Good |
| Resistance to hydrolysis | Good |
| Resistance to microbes | Good |
| Exposure to weather and high energy radiation (UV) | Good |
| Blocking action | Good |

In one preferred embodiment, the manufacturing process consists of first preparing the elastomer film by a process of extrusion, combining layers of elastomer with a support, for example of paper, to produce reels of sheet material consisting of a film of elastomer and a paper support, it being possible to repeat said arrangement successively giving rise to a structure consisting of: film of elastomer - paper - film of elastomer - paper, etc.

Once the reel of this nonslip material has been prepared, it is cut up into pieces whose dimensions are more or less the same as those of the surface to be given nonslip properties, using said laminar pieces in the manufacture by injection of the object, for example a tray.

In this case, the previously dehumidified plastic is introduced in granular form into the hopper of the injection machine in which it passes through a nozzle heated to a temperature which is sufficient to melt and homogenize the material.

Simultaneously, and with the mould in the open position, the polyurethane material that has been previously cut up is introduced into the cavity of the mould, after which said mould is closed and the plastic material is injected at high pressure, becoming applied to the walls of the mould and the film placed inside it, thereby joining the plastic material and the nonslip film closely together by heat.

The solidified material is cooled to give the finished product, such that by opening the mould the object which has been manufactured, for example a tray, can be extracted and the next film can be placed in the mould to start a new cycle.

In particular, a charge of static electricity can be applied to the film just before the mould is closed, after which it is immediately arranged inside said mould, in order that the nonslip film adheres well inside the cavity of the mould.

In one particular embodiment, the procedure consists of the following steps:
a) the cleaning of the film, which has been previously cut up into pieces of the required dimensions, and giving it an electrostatic charge,
b) introducing the electrostatically charged film into the open mould,
c) closing the mould and introducing the plastic material,
d) cooling the object whilst inside the mould,
e) opening the mould and extracting the finished article.

The total injection time, which can vary according to the materials, arrangement and the object to be manufactured, is about 60 seconds per article, consisting approximately of about 15 seconds for cleaning the film, applying the electrostatic charge and introducing it into the mould, about 30 seconds for introducing the plastic material and cooling the object, and about 15 seconds for opening the mould and extracting the finished article.

The materials used to make both the film and the object which is to be given nonslip properties can vary considerably and fulfil the nonslip surface properties described above, for which, and as has been indicated above, polyurethane is preferably used.

In an alternative embodiment, the treatment of the surface of the tray or similar object can be carried out using a layer of silicon elastomer according to the following steps:
a) Cleaning the surface,
b) Applying a layer of primer,
c) Drying the layer of primer
d) Applying a layer of silicon elastomer,
e) Drying the layer of silicon elastomer, either naturally or artificially.

In one particular example of the application of the procedure for manufacturing trays, the entire support surface of said trays may be coated with a thin layer of polyurethane which can be smooth or provided with micro-incisions or micro-grooves, said layer of polyurethane extending preferably over the entire surface of the tray.

### BRIEF DESCRIPTION OF THE DRAWINGS

In order that the present invention be better understood, the accompanying drawings show by way of non-limiting example a tray manufactured according to the manufacturing procedure of the present invention.

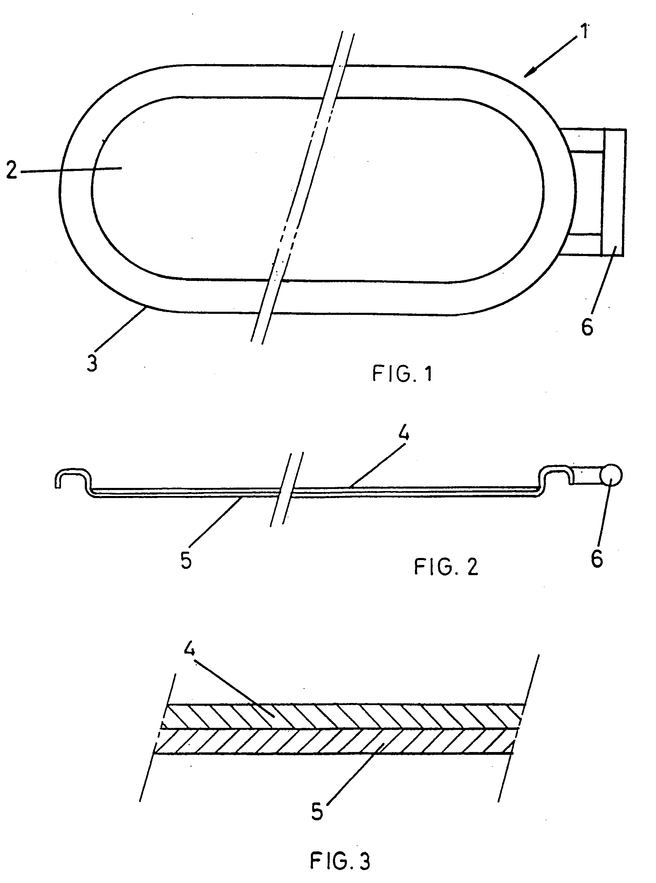

Figure 1 is a plan view showing an embodiment of a tray according to the present invention.

Figure 2 is a complete longitudinal section of the tray shown in figure 1.

Figure 3 is a section in detail of part of the tray showing the applied coating.

Figure 4 is an alternative embodiment in which the entire body of the tray is coated.

Figure 5 is a schematic representation of the operation of the tray made according to the present invention.

Figure 6 is a section on a larger scale of one version of a nonslip surface finish with micro-incisions or micro-grooves.

Figure 7 is a section view of part of a nonslip tray in which the nonslip film has been applied with an interposed adhesive layer.

### DESCRIPTION OF THE PREFERRED EMBODIMENTS

In the embodiments shown in the drawings, the object manufactured consists of a tray 1 whose shape can vary, an appreciably oval shape having been shown in the figures by way of example, provided with a sunken region 2, in which the objects to be carried are normally placed, and a surrounding 3 at the perimeter of the tray to make it easier to handle. The tray which forms the object of the invention is characterized in that the dished or sunken region 2 is provided with a layer 4 of polyurethane with a smooth finish which coats the entire region of the bottom 5 of said sunken region 2, giving it a smooth, shiny finish which, it has been discovered, exhibits excellent nonslip properties.

The tray may be provided with handles 6, only one being shown in the drawings corresponding to one side of the tray, although it may of course have no handles, its end edges being free such that the tray is held directly by said edges.

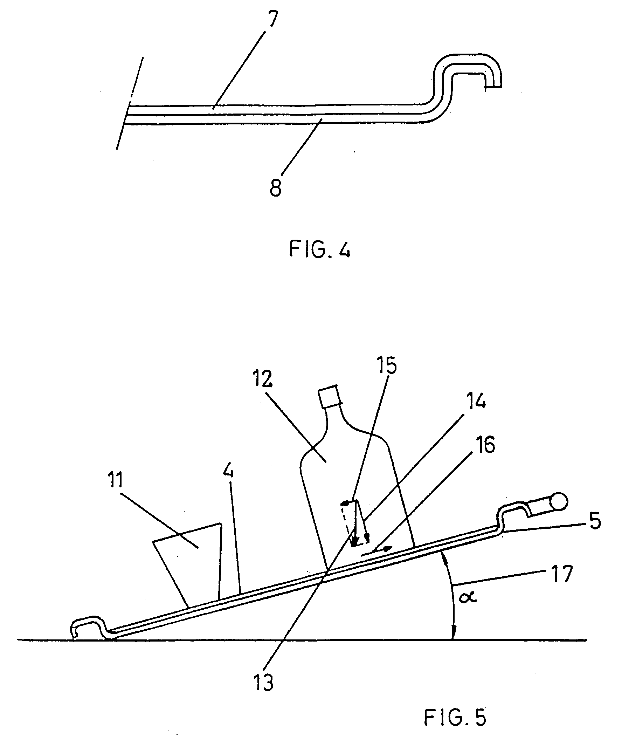

In one embodiment shown in figure 4, the bottom of the tray 8, like the rest of the supper surface, is coated with a surface layer of polyurethane 7 which extends over the entire upper or visible surface of said tray, giving it nonslip properties over the entire upper surface as well as a more uniform appearance.

Figure 5 shows schematically the tray in operation, where it can be seen that various types of object, such as those labelled 11 and 12, can be placed upon it, such that the weight of a particular object, for example the one indicated by the reference number 12, represented by the vector 13, can be resolved into a vector 15, parallel to the support surface, and another vector 14, perpendicular thereto, giving rise to a frictional force 16 which is the product of said vector 14 and the coefficient of friction. Under these conditions, if the tray is inclined at an angle Ó, indicated by the number 17, the objects will not slip providing that the frictional force 16 is greater than the vector 15 tending to cause it to slip.

The thickness of the polyurethane layers 4 or 7 with which the tray is coated can vary, although it is preferably between 10 microns and 1 mm. More preferably, said thickness is between 20 and 260 microns in the case of application by pulverization or other systems similar to industrial painting processes, or of the order of 0.5 - 1 mm in the case of application of complete polyurethane layers.

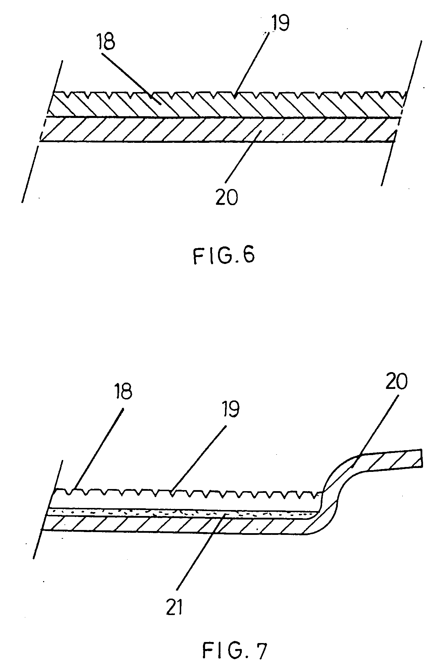

In the embodiments shown in figures 6 and 7 the surface of the nonslip layer 18 is provided with multiple micro-grooves or micro-incisions 19 in the form of very small grooves or in the form of micro-craters or of another type, it being possible for them to adopt any suitable shape. The nonslip layer may be applied to the body of the tray 20 directly, as shown in figure 6, or with an intermediate adhesive layer 21, as shown in figure 7.

The present invention also applies to trays with nonslip properties obtained by applying the procedure foreseen herein, according to the operational steps described above.

## Claims

**1.-** A procedure for manufacturing plastic objects with nonslip surfaces, characterized in that it comprises the application of a nonslip laminar layer, preferably made of polyurethane, with a thickness of between 50 and 300 microns, preferably about 150 microns, to the face of the object which is to have nonslip properties, closely joining the nonslip film to the surface of the plastic support, preferably by means of over-injection in a mould designed for manufacturing the object by injection, applying a nonslip film of polyurethane previously cut, cleaned and provided with an electrostatic charge, achieving a close join between the nonslip polyurethane film and the object being manufactured.

**2.** A procedure for manufacturing plastic objects with nonslip surfaces according to claim 1, characterized in that the nonslip film is prepared by joining a laminar paper support or the like to a layer of polyurethane to prepare bobbins designed for cutting up the laminar pieces which are designed to be placed in the mould prior to the injection stage.

**3.** A tray with nonslip properties, of the type which comprises a laminar support body provided with a peripheral rim and/or handles for holding said tray, characterized in that the entire surface on which objects are supported is coated with a thin layer of polyurethane whose upper surface on which the objects to be carried are placed is completely smooth.

**4.** A tray with nonslip properties according to claim 3, characterized in that the surface layer of polyurethane extends over the entire visible upper surface of the tray, including the entire peripheral rim.

**5.** A tray with nonslip properties, characterized in that the surface on which the objects to be carried are placed is provided with a nonslip layer whose upper face is provided with micro-incisions in order to increase the coefficient of friction.

**6.** A nonslip plastic tray manufactured according to the procedure defined in claims 1 and 2.
